Europäisches Patentamt

European Patent Office

Office européen des brevets

(19)

(11) Publication number: 0 111 958

A1

(12) EUROPEAN PATENT APPLICATION

(21) Application number: 83201713.1

(22) Date of filing: 03.12.83

(51) Int. Cl.³: F 16 B 5/02

(30) Priority: 23.12.82 IT 2377282 U

(43) Date of publication of application:
27.06.84 Bulletin 84/26

(84) Designated Contracting States:
AT BE DE FR GB

(71) Applicant: DROPSA S.p.A.
Via Massimiano 25
I-20134 Milano(IT)

(72) Inventor: Divisi, Gualtiero
Via Massimiano 25
I-20134 Milano(IT)

(74) Representative: Luksch, Giorgio, Dr.-Ing. et al,
Ing. A. Giambrocono & C. S.r.l. Via Rosolino Pilo, 19/b
I-20129 Milano(IT)

(54) Connection device for block form elements in general, in particular for hydraulics.

(57) A connection device for block form elements, in particular for hydraulics and lubrication fields, wherein a through bore (2) is provided in the elements (1, 1', 1", 1''' etc.) and is partially occupied by an internally and externally threaded bush (7) and wherein said through bore (2) comprises a step (45) against which there abuts the head of a screw (6), the shank of which emerges from the element (1, 1', 1", 1''' etc) in order to be screwed into a bush (7) which partly occupies the through bore (2) in another element (1, 1', 1", 1''' etc.).

Fig. 1

EP 0 111 958 A1

Connection device for block form elements in general, in particular
for hydraulics

The invention relates to a connection device for elements of block form,
in particular for hydraulics, and which is of particularly useful
application by virtue of the combination and configuration of its parts.

Modular systems are extremely widespread in many technical fields because
they considerably reduce plant construction costs. In the hydraulics
and lubrication field, certain parts of the relative circuits are
already constructed by means of modular blocks, which can be combined
in various ways according to the desired results. The fixing together
of said blocks is done by tie-rods which join said blocks by passing
through them in the direction of their width or length, according to
requirements.

Said fixing system, provided for connecting together modular blocks in
which high-pressure fluids operate, has the drawback of undergoing an
elongation, with consequent loss of sealing properties, which is
proportional to the pressure and in particular to the tie-rod length.
These drawbacks further increase if the circuit operates in a high-
temperature environment. From the constructional viewpoint, tie-rods
of length which differ according to the number of blocks to be combined
together must also be constantly available.

The object of the present invention is to provide a connection device
for blocks in general, in particular for hydraulic or lubrication circuits, which properly resists mechanical stresses generated by the high pressures, even at high temperature, without any loss of sealing properties and without tie-rods of the most various lengths having to be kept in store.

This and further objects of the invention will be apparent to the expert of the art on reading the description and claims given hereinafter.

According to the invention, the connection device is characterised essentially in that a through bore provided in an element is partly occupied by an externally and internally threaded bush, and comprises a step against which there abuts the head of a screw, of which the shank emerges from the block in order to be screwed into a further bush which partly occupies the through bore in another element.

The invention is illustrated by way of non-limiting example in the figures of the single accompanying drawing, in which:

Figure 1 is a section through the system for fixing together a set of coupled blocks, and
Figure 2 is a section through the bore of the fixing device.

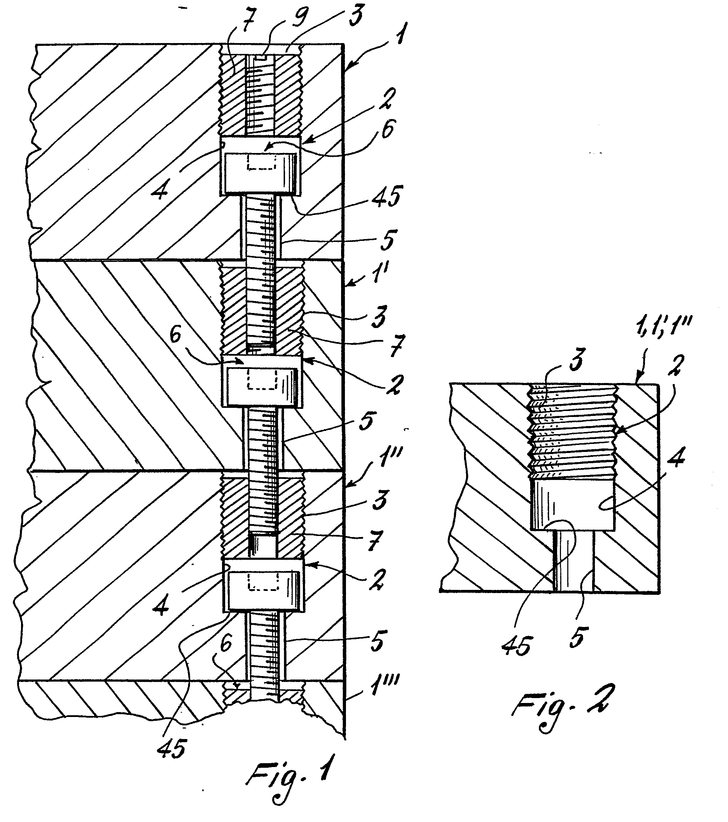

In the figures, the reference numeral 1 indicates a first block, and 1' and 1" a second and third block, which are in stacked relationship and are connected together.

- 3 -

In the usual manner and therefore not further illustrated in detail, the blocks can contain ducts, valves, slide valves etc., which are traversed or occupied by high-pressure fluids, for example lubricating greases or oils.

In each block there are provided identical through bores 2, of which only one is therefore represented and described. Said bores comprise a first threaded part 3, a second non-threaded part 4 of equal diameter to the first, and a third non-threaded terminal part 5 of diameter less than the preceding bores and which, with the preceding part, forms a step 45.

Said bores are engaged by the fixing elements, of which two are provided for each bore, namely a conventional socket head screw 6 and an internally and externally threaded bush 7 provided at one end with a slot 9 into which to fit the end of a screwdriver for screwing the bush into the bore.

On assembly, assuming that a bush has already been screwed into the threaded part of the relative bore 2 in the lowest block 1''', the socket head screw 6 is inserted into the bore 2 of the overlying block 1'' and is screwed tightly into said bush 7. A bush 7 is then screwed in situ into the bore 2 of the block 1'', a socket head screw 6 is inserted into the bore 2 of the block 1', and is screwed into the underlying bush 7. A bush 7 is then screwed into the block 1', and the upper block 1 is then connected by screwing the screw 6 into the bush 7.

- 4 -

The assembly is cyclic in terms of the aforesaid operations, and thus theoretically an indefinite number of blocks can be fixed together using only two pieces (bush and screw).

Claims:

1.    A connection device for block form elements, characterised in that a through bore (2) provided in a element (1, 1', 1", 1''' etc.) is partly occupied by an internally and externally threaded bush (7), and comprises a step (45) against which there abuts the head of a screw (6), of which the shank emerges from the element (1, 1', 1", 1''' etc.) in order to be screwed into a bush (7) which partly occupies the through bore (2) in another element (1, 1', 1", 1''' etc.).

2.    A device as claimed in claim 1, characterised in that the bush (7) is screwed into a threaded zone (3) of the bore (2).

0111958

Fig. 1

Fig. 2

| | | EP 83201713.1 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE - A1 - 3 005 825 (BOSCH-SIEMENS HAUSGERÄTE GMBH) <br> * Fig. 1; page 4, lines 7-27 * <br> -- | 1,2 | F 16 B 5/02 |
| A | DE - A1 - 2 839 118 (GEBR. SCHMACHTENBERG GMBH) <br> * Pages 7-9 * <br> ---- | 1,2 | |

| | TECHNICAL FIELDS SEARCHED (Int. Cl. ³) |
|---|---|
| | F 16 B |

The present search report has been drawn up for all claims

| Place of search | Date of completion of the search | Examiner |
|---|---|---|
| VIENNA | 23-02-1984 | HOFBAUER |